# EUROPEAN PATENT SPECIFICATION

(11) **EP 1 226 013 B1**
(45) Date of publication and mention of the grant of the patent: **13.08.2003**
(21) Application number: 00969745.9
(22) Date of filing: 31.10.2000
(51) Int. Cl.: B29C 47/00, B29C 55/02

(54) **APPARATUS AND METHOD FOR PRODUCING A POLYOLEFINIC TRANSPIRING FILM**
VORRICHTUNG UND VERFAHREN ZUR HERSTELLUNG EINER ATMUNGSFÄHIGEN POLYOLEFINFOLIE
DISPOSITIF ET PROCEDE DE PRODUCTION D'UN FILM RESPIRANT POLYOLEFINIQUE

(30) Priority: 05.11.1999 IT MI992318
(43) Date of publication of application: 31.07.2002
(73) Proprietor: Nuova Pansac S.p.A., 20124 Milano (IT)
(72) Inventor: LORI, Fabrizio, I-46030 Cerese di Virgilio (IT); BORTOLETTO, Graziano, I-31059 Zero Branco (IT)
(74) Representative: Premru, Rok
(86) International application number: PCT/IB00/01572
(87) International publication number: WO 01/032394

(56) References cited:
- EP-A- 0 283 200
- EP-A- 0 363 937
- AT-B- 311 666
- GB-A- 1 116 739
- US-A- 3 884 748
- US-A- 4 277 594
- US-A- 5 110 686
- US-A- 5 232 767

## Description

The present invention relates to an apparatus and method for producing a polyolefinic transpiring film, capable of allowing vapour and air to pass therethrough while being impermeable to liquids.

The patent EP 0.283.200 B1, to which reference is made for a general view of the prior art, describes a method for producing transpiring films in which a linear polyethylene extrusion at low density (LLDPE), charged with CaCO₃, is first heat-embossed, for providing reduced thickness imprints, and then stretched to obtain a transpiring film with a particularly elevated transpirability in the reduced thickness zones.

From US-A-4277594 it is known a method for producing a polyethylene extruded film wherein a bubble passes through a collapsing station where it is drawn through a pair of nip rollers to produce a flat film which is then heated and successively stretched.

EP-A-363937 discloses a process for making a transpiring film wherein an annular film is folded in such a manner as to form a flat shape which is first heated, then stretched and successively cooled.

Transpiring films according to the prior art moreover have various problems and drawbacks.

One problem which is encountered in known polyolefinic transpiring films is the possible formation of micro-holes during the stretching phase of the film, which formation is due to the presence of impurities, in particular oxidised and carbonised particles.

Such impurities may already be present in the mix to be extruded, or they may form during the extrusion process of the polyethylene.

The micro-holes, which have an average diameter between 0.2 and 2 mm, may compromise the liquid impermeability characteristics; such risk increases with the speed of the stretching process and with the increase in the degree of stretching of the film.

Another problem which is encountered in polyolefinic transpiring films is the non-uniformity of the transpirability.

A principal aim of the present invention is to provide a method and an apparatus for producing a polyolefinic transpiring film which allow to overcome at least part of the above cited problems. Such aim is obtained by means of a method in accordance with the claim 1 and by means of a plant in accordance with claim 3.

A further embodiment of the method may be carried out in accordance with the dependent claim 2, and a further embodiment of the plant may be carried out in accordance with the dependent claim 4.

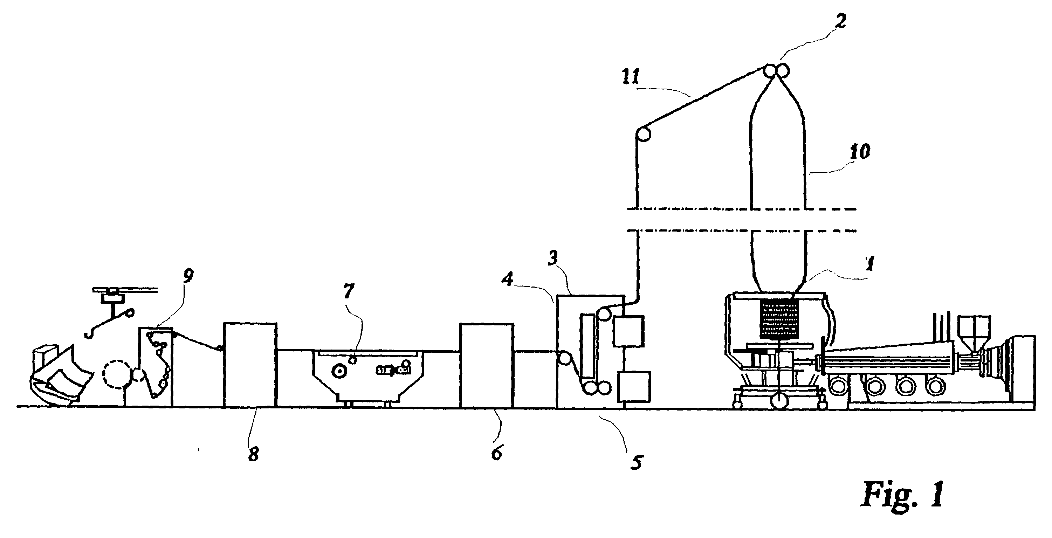

The method and the apparatus according to the invention will appear in a clear manner from the following description of one possible embodiment, provided in a purely indicative manner, together with the drawing figure which shows, in a schematic view, a manufacturing plant in accordance with the invention.

The present method provides for the use of a mix preferably of linear polyethylene at low density (LLDPE) charged with a base of CaCo₃.

Alternatively, it is possible to use linear polyethylene at low density (LLDPE) or polyethylene at medium density (MDPE).

It is also possible to use copolymers of polyethylene having α-olefin with 4-10 atoms of carbon (1 butene, 1 pentene, 1 esene, 1 eptene, 1 ottene, 4 metil, 1 pentene).

Naturally, it is also possible to use other types of charges, organic or inorganic, having dimensions between 0.6 and 6 µm and treated in a way to render their surfaces hydrophopic.

In particular, it is possible to use: clay, kaolin, zeolite, Zn, Al, Ca, CaSO₄, BaSO₄, MgO, Mg(OH)₂, TiO₂.

The quality of the added charge depends also on the degree of desired traspirability, normally the charge constitutes from 30% to 70% by weight of the mix.

Such mix is bubble-extruded (so-called blow moulding), by means of a circular-head extruder 1 in order to obtain a tubular 10.

The temperature of the tubular exiting from the extruder 1 is between 150-230°C and, preferably, between 170-190°C.

The ratio of expansion of the tubular 10 may vary between 1:2 and 1:4, and preferably is 1:3.

One characteristic of the method of the present invention is the fact that the extruded and expanded tubular 10 is subjected to a calendering operation.

In detail, the tubular 10 enters, at a temperature of about 80-100°C, in a first calender 2 where it is compressed and stretched into the form of a sheet 11, constituted by two superimposed layers, assuming a width equal to half of the circumference of the tubular and a thickness which is double with respect to the thickness of the tubular.

Such characteristic has the advantage of resolving the problem of insufficient liquid impermeability due to the micro-holes which may form in the films during the stretching phase: it is in fact extremely improbable that both the layers of the film are damaged at the same point. The calender 2 used for flattening the tubular 10 comprises a pair of smooth coupled rollers of which the first one is chromed steel and the second one is rubber with a hardness of 60-80 shore; the pressure supplied by the calander 2 on the flattened tubular 10 varies between 5 and 10 kg/cm2.

A second characteristic of the method according to the invention consists in the fact that after having been flattened, the film 11 is heated up to a softening temperature.

Such temperature depends on the type of mix which is extruded, in the case of an LLDPE base mix it may vary between 80 and 130 °C and usually, it is around about 100 °C.

The heating executed in this manner favours the removal of humidity or of additives present in the mix which have a low evaporation point.

Moreover, the heating executed in this manner favours the elimination of micro-stresses present in the film due to the preceding phases of the method and favours the homogenisation of the internal structure of the film.

In order to obtain the heating, the film 11 is first made to run on heated rollers 3, having a temperature of about 60-70 °C, and then made to pass near infrared ray lamps 4 which further increase the temperature up to the point of softening.

In fact the use only of the heated rollers - normally heated with water or oil - does not allow to reach the softening temperature, or at least with great difficulty.

Moreover, the infrared lamps provide the advantage of also strongly heating the layer of air about the film 11 (typically up to 300-400 °C) which therefore permits to completely eliminate the residual humidity still present on the film 11.

A third characteristic of the method according to the invention consists in the fact that the film heated in this manner is further calendered by a calender 5 and, thereafter, cooled to a temperature between 8 and 30 °C.

Such cooling is carried out, preferably, through contact by means of one of the rollers of the calender 5, which is maintained at a constant temperature between 8 and 30 °C.

The further calendering permits, through the compression provided by the rollers, to intimately unite the two original layers so as to avoid the risks of de-lamination of the film produced in this manner, and the thermal shock to which the film is subjected permits to block the stabilisation process.

It is also possible, in this phase, to carry out an embossing operation of the film for a purely aesthetic purpose which does not modify the weight of the film.

It has been found that the thermal shock to which the film is subjected allows to obtain an improved transpirability during the successive stretching operations.

The compression of the film is obtained by coupling a chromed-steel roller coupled with a rubber roller (hardness 60-80 shore).

Successively to the process of sterilisation, the film 11 is subjected to transverse and/or longitudinal stretching.

For such purpose, there are present appropriate means 6 adapted to carry out the transversal stretching and appropriate means 8 adapted to carry out the longitudinal stretching.

In the illustrated example, the film 11 is subjected first to a transversal stretching and then to a longitudinal stretching: naturally these phases may also be inverted.

Preferably between the transversal stretching means 6 and the longitudinal stretching means 8 there are provided tentering means 7 for eliminating the folds created by the first process of stretching.

Normally, the ratio of longitudinal stretching varies between 1:1.5 and 1:2.5.

Also in this manner, the ratio of longitudinal stretching varies, usually, between 1:1.5 and 1:2.5.

However, if required, the ratio of stretching may also arrive to a ratio of 1:4.

At the end of the stretching phase, the film 11 may undergo further working steps or be wound up by an appropriate winding machine 9.

## Claims

1. Method for producing polyolefinic transpiring films comprising the steps of:
- bubble extruding a mix of charged LLDPE;
- flattening the tubular (10) in order to obtain a flat film (11);
- heating the flat film (11) up to a softening temperature;
- compressing the flat film (11) in order to unite the two original layers;
- cooling the flat film to a temperature between 8-30 °C; and
- transversal and/or longitudinal stretching of the flat film (11).

2. Method, according to claim 1, wherein the flat film (11) is first heated by conduction and successively by irradiation.

3. Plant for producing a stretched polyolefinic film comprising, in succession:
- a bubble extruder (1);
- a first calender (2) adapted to flatten the extruded tubular;
- means (3,4) adapted to heat the flat film (11) up to a softening temperature;
- a second calender (5) adapted to compress the heated film and unite the two original layers of the heated film;
- means (5) adapted to quickly cool the film up to a temperature comprised between 8-30 °C;
- means (6) adapted to transversally stretch the film and/or means (8) adapted to longitudinally stretch the film.

4. Plant, according to claim 3, wherein said means adapted to heat the flat film (11) comprise, in succession
first heating means, adapted to heat the film by conduction; and
second heating means adapted to heat the film by irradiation.

## Patentansprüche

1. Verfahren zur Herstellung polyolefinischer dampf- und luftdurchlässiger Folien, umfassend die Schritte:
- Bubble-Extrusion einer Mischung von beschicktem LLDPE;
- Verflachen des Schlauchs (10), um eine Flachfolie (11) zu erhalten;
- Erwärmen der Flachfolie (11) bis zu einer Erweichungstemperatur;
- Zusammendrücken der Flachfolie (11), um die ursprünglichen zwei Lagen zu vereinen;
- Abkühlen der Flachfolie auf eine Temperatur zwischen 8-30 °C; und
- Strecken der Flachfolie (11) in der Querrichtung und/oder Längsrichtung.

2. Verfahren gemäß Anspruch 1, wobei die Flachfolie (11) zuerst durch Wärmeleitung und anschließend durch Strahlung erwärmt wird.

3. Anlage zur Herstellung einer gestreckten polyolefinischen Folie, umfassend in dieser Abfolge:
- einen Bubble-Extruder (1)
- einen ersten Kalander (2), der den extrudierten Schlauch verflachen kann;
- Mittel (3, 4), welche dazu ausgebildet sind, die Flachfolie (11) bis auf eine Erweichungstemperatur zu erwärmen;
- einen zweiten Kalander (5), der dazu ausgebildet ist, die erwärmte Folie zusammenzudrücken und die zwei Ausgangslagen der erwärmten Folie zu vereinen;
- Mittel (5), die dazu ausgebildet sind, die Folie schnell auf eine Temperatur abzukühlen, die zwischen 8-30 °C liegt;
- Mittel (6), die dazu ausgebildet sind, die Folie in Querrichtung zu strecken, und/oder Mittel (8), die dazu ausgebildet sind, die Folie in Längsrichtung zu strecken.

4. Anlage gemäß Anspruch 3, wobei die Mittel, welche dazu ausgebildet sind die Flachfolie (11) zu erwärmen, aufeinanderfolgend umfassen:
erste Erwärmungsmittel, die dazu ausgebildet sind, die Folie durch Wärmeleitung zu erwärmen; und
zweite Erwärmungsmittel, die dazu ausgebildet sind, die Folie durch Strahlung zu erwärmen.

## Revendications

1. Procédé de fabrication de films polyoléfiniques respirants, qui comprend les étapes de ;
extrusion en bulle d'un mélange de polyéthylène linéaire basse densité chargé ;
aplatissement de l'extrusion tubulaire (10) afin d'obtenir un film plat (11) ;
chauffage du film plat (11) jusqu'à une température de ramollissement ;
compression du film plat (11) afin d'unir les deux couches initiales ;
refroidissement du film plat à une température comprise entre 8 et 30°C ; et
étirage transversal et/ou longitudinal du film plat (11).

2. Procédé selon la revendication 1, dans lequel le film plat (11) est d'abord chauffé par conduction et ensuite par rayonnement.

3. Installation pour la fabrication d'un film polyoléfinique étiré comprenant, en succession :
un dispositif d'extrusion en bulle (1) ;
un premier dispositif de calandrage (2) permettant d'aplatir le tube extrudé ;
un dispositif (3, 4) permettant de chauffer le film plat (11) jusqu'à une température de ramollissement ;
un deuxième dispositif de calandrage (5) permettant de comprimer le film chauffé et d'unir les deux couches initiales du film chauffé ;
un dispositif (5) permettant de refroidir rapidement le film jusqu'à une température comprise entre 8 et 30°C ; et
un dispositif (6) permettant d'étirer transversalement le film et/ou un dispositif (8) permettant d'étirer longitudinalement le film.

4. Installation selon la revendication 3, dans laquelle le dit dispositif permettant de chauffer le film plat (11) comprend, en succession :
un premier moyen de chauffage, prévu pour chauffer le film par conduction ; et
un deuxième moyen de chauffage, prévu pour chauffer le film par rayonnement.
